# DEMANDE DE BREVET EUROPEEN

(11) **EP 1 820 721 A1**
(43) Date de publication de la demande: **22.08.2007**
(21) Numéro de dépôt: 07290207.5
(22) Date de dépôt: 19.02.2007
(51) Int. Cl.: B62H 5/00, B62H 3/00

(54) **Systeme automatique de stockage de cycles, cycle pour un tel systeme et dispositif de verrouillage pour un tel cycle**

(30) Priorité: 21.02.2006 FR 0601513
(71) Demandeur: JCDecaux SA, 92200 Neuilly-Sur-Seine (FR)
(72) Inventeur: Gagosz, Jean-Claude, 28140 Bu (FR); Zeferino, Emmanuel, 78180 Montigny le Bretonneux (FR)
(74) Mandataire: Cabinet Plasseraud

(57) **Abrégé**

Système automatique de stockage de cycles comprenant des une pluralité de cycles portant chacun un organe de verrouillage (10) destiné à être reçu dans une gâche d'un poste de verrouillage. L'organe de verrouillage est monté mobile sur le cycle de façon à permettre un débattement vertical de l'organe de verrouillage par rapport audit cycle.

## Description

La présente invention est relative aux systèmes automatiques de stockage de cycles, aux cycles pour de tels systèmes et aux dispositifs de verrouillage pour de tels cycles.

Plus particulièrement, l'invention concerne un système automatique de stockage de cycles comprenant :
- une pluralité de cycles (par exemple des bicyclettes) portant chacun un organe de verrouillage,
- une pluralité de postes de verrouillage fixes comportant chacun au moins une gâche adaptée pour recevoir l'organe de verrouillage de l'un des cycles et pour retenir ledit organe de verrouillage lorsqu'il atteint une position de verrouillage.

Un tel système de stockage de cycles peut être utilisé par exemple pour mettre des cycles à disposition du public, moyennant identification de l'emprunteur du cycle et éventuellement paiement d'une location auprès d'une borne de contrôle.

Le document WO-A-02/095698 décrit un exemple d'un tel système de stockage de cycles, dans lequel les cycles se verrouillent sur les postes de verrouillage par engagement horizontal du premier organe de verrouillage de chaque cycle dans la gâche d'un poste de verrouillage.

Ce système connu de stockage de cycles présente notamment l'inconvénient que, lorsqu'un utilisateur remet un cycle à un poste de verrouillage après l'avoir utilisé, il risque de mal engager l'organe de verrouillage du cycle dans la gâche du poste de verrouillage notamment si l'organe de verrouillage n'est pas positionné à bonne hauteur par rapport à la gâche, par exemple du fait des irrégularités du sol ou du fait d'une mauvaise installation du poste de verrouillage. Dans ce cas, l'utilisateur peut penser avoir verrouillé son cycle sur le poste de verrouillage du fait que l'organe de verrouillage est partiellement engagé dans la gâche, mais le cycle n'est en fait pas immobilisé et peut donc être ultérieurement volé.

La présente invention a notamment pour but de pallier cet inconvénient.

A cet effet, selon l'invention, un système de stockage de cycles du genre en question est caractérisé en ce que l'organe de verrouillage est monté mobile sur le cycle de façon à permettre un certain débattement de l'organe de verrouillage au moins verticalement par rapport audit cycle.

Grâce à ces dispositions, on garantit un bon verrouillage du cycle au poste de verrouillage, puisque l'organe de verrouillage peut s'adapter à la hauteur de la gâche lors du verrouillage du cycle.

Dans différents modes de réalisation de l'invention, on peut éventuellement avoir recours en outre à l'une et/ou à l'autre des dispositions suivantes :
- la gâche comporte une entrée pourvue d'au moins une rampe de guidage pour déplacer l'organe de verrouillage jusqu'à une position nominale de verrouillage par rapport au poste de verrouillage ;
- l'organe de verrouillage est sollicité élastiquement vers une position de repos par rapport au cycle ;
- l'organe de verrouillage est monté pivotant par rapport au cycle autour d'un axe de rotation horizontal ;
- l'organe de verrouillage comporte un évidement adapté pour recevoir un organe d'accrochage appartenant à la gâche, ledit évidement laissant un jeu vertical entre l'organe d'accrochage et l'organe de verrouillage pour permettre ledit débattement de l'organe de verrouillage ;
- l'organe de verrouillage comporte un moyeu circulaire présentant un axe central parallèle à l'axe de rotation et l'évidement comporte un bord extérieur circulaire sensiblement centré sur ledit axe central, la gâche comportant un bord de butée qui coopère par butée avec le moyeu pour limiter l'engagement horizontal de l'organe de verrouillage dans la gâche, et l'organe d'accrochage coopérant avec ledit bord extérieur de l'évidement pour empêcher que l'organe de verrouillage ne ressorte de la gâche lorsque le cycle est verrouillé sur le poste de verrouillage ;
- l'évidement est ménagé dans une plaque verticale solidaire du moyeu ;
- l'axe de rotation est distinct de l'axe central, le moyeu étant relié audit axe de rotation par un bras de levier ;
- l'axe de rotation est situé vers l'avant par rapport au moyeu, dans la direction d'insertion de l'organe de verrouillage dans la gâche ;
- le cycle comporte au moins une unité centrale électronique, la gâche et l'organe de verrouillage comportant des interfaces permettant de faire communiquer ladite unité centrale du cycle avec le poste de verrouillage lorsque ledit cycle est verrouillé sur le poste de verrouillage ;
- le cycle comporte au moins un circuit électrique, la gâche et l'organe de verrouillage comportant des contacts électriques disposés en regard les uns des autres pour relier le circuit électrique du cycle au poste de verrouillage lorsque ledit cycle est verrouillé sur ledit poste de verrouillage ;
- lesdits contacts électriques comprennent au moins :
   - une zone de contact de forme générale incurvée, de concavité tournée vers ledit axe central, et appartenant à un premier élément choisi parmi l'organe de verrouillage et la gâche,
   - et un contact électrique complémentaire qui est en appui élastique sur ladite zone de contact de forme générale incurvée lorsque le cycle est verrouillé sur le poste de verrouillage, ledit contact électrique complémentaire appartenant à un deuxième élément choisi parmi l'organe de verrouillage et la gâche ;
- ladite zone de contact de forme générale incurvée est solidaire de l'organe de verrouillage et ledit contact électrique complémentaire appartient à la gâche ;
- l'organe de verrouillage comporte deux zones de contact de forme générale incurvée, de concavité tournée vers ledit axe central, et la gâche comporte deux contacts électriques complémentaires qui sont en appui élastique sur lesdites zones de contact de forme générale incurvée lorsque le cycle est verrouillé sur le poste de verrouillage ;
- l'organe de verrouillage comporte en outre une zone de contact centrale disposée en correspondance avec l'axe central et la gâche comporte un contact électrique central qui est en appui élastique sur ladite zone de contact centrale lorsque le cycle est verrouillé sur le poste de verrouillage.

Par ailleurs, l'invention a également pour objet un cycle pour un système tel que défini ci-dessus, ce cycle comprenant un organe de verrouillage destiné à être reçu dans une gâche appartenant à un poste de verrouillage, ledit organe de verrouillage étant monté mobile sur le cycle de façon à permettre un certain débattement de l'organe de verrouillage au moins verticalement par rapport audit cycle.

Enfin, l'invention a aussi pour objet un dispositif de verrouillage pour un cycle tel que défini ci-dessus, ce dispositif de verrouillage comprenant un support destiné à être fixé rigidement au cycle et un organe de verrouillage destiné à être reçu dans une gâche appartenant à un poste de verrouillage, ledit organe de verrouillage étant monté mobile sur le support de façon à permettre un certain débattement de l'organe de verrouillage au moins verticalement par rapport audit support lorsque le support est monté sur le cycle.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un système automatique de stockage de cycles selon une forme de réalisation de l'invention,
- la figure 2 est une vue de détail montrant le verrouillage d'un cycle sur l'un des postes de verrouillage de la figure 1,
- la figure 3 est une vue de détail montrant le dispositif de verrouillage porté par le cycle de la figure 2,
- la figure 4 est une vue de côté de la borne de verrouillage sur laquelle est verrouillé le cycle de la figure 2,
- la figure 5 est une vue éclatée simplifiée de la gâche de la borne de verrouillage de la figure 4,
- la figure 6 est un schéma de principe illustrant le fonctionnement de la gâche de la figure 5, présenté sous la forme d'une coupe prise selon la ligne VI-VI de la figure 5,
- la figure 7 est une vue de côté du dispositif de verrouillage de la figure 3,
- la figure 8 est une vue en coupe selon la ligne VIII-VIII de la figure 7,
- la figure 9 est une vue éclatée du dispositif de verrouillage des figures 7 et 8, vue selon la direction IX de la figure 8,
- la figure 10 est une vue schématique d'ensemble montrant le cycle de la figure 2 en position d'arrêt temporaire, avec son antivol mis,
- la figure 11 est une vue de détail de la figure 10 montrant le dispositif de verrouillage du cycle avec l'antivol mis, la clef de l'antivol n'étant pas encore enlevée par l'utilisateur,
- la figure 12 est une vue en coupe similaire à la figure 8 montrant le dispositif de verrouillage avec son antivol mis,
- et la figure 13 est une vue éclatée similaire à la figure 9, montrant le dispositif de verrouillage avec son antivol mis.

Sur les différentes figures, les mêmes références désignent des éléments identiques ou similaires

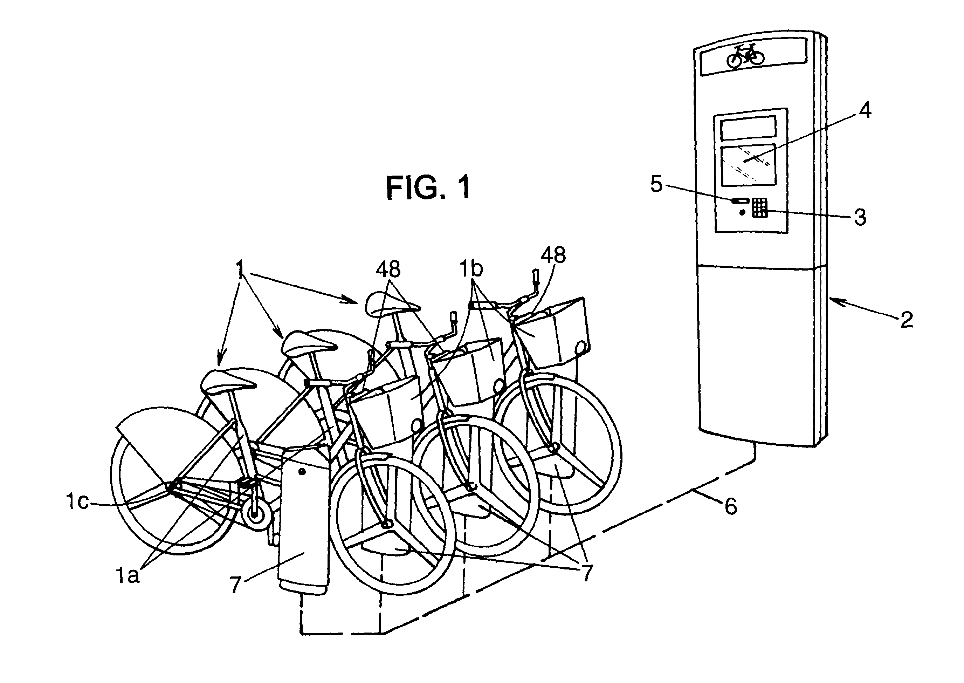

Comme représenté sur la figure 1, la présente invention concerne un système automatique de stockage de cycles 1 tels que notamment des bicyclettes, permettant par exemple de stocker des cycles sur la voie publique de façon à les mettre à disposition du public.

Ce système automatique de stockage de cycles peut comporter plusieurs aires de stockage de cycles, dont une est représentée sur la figure 1. Chaque aire de stockage de cycles comprend une borne interactive 2 dotée d'une interface utilisateur comprenant par exemple un clavier 3, un écran 4 et un lecteur de cartes portatives électronique 5.

La borne interactive 2 est reliée, par exemple par une liaison filaire enterrée 6, à une pluralité de postes de verrouillage 7 qui peuvent par exemple se présenter sous la forme de bornes de verrouillage fixées au sol sur la voie publique.

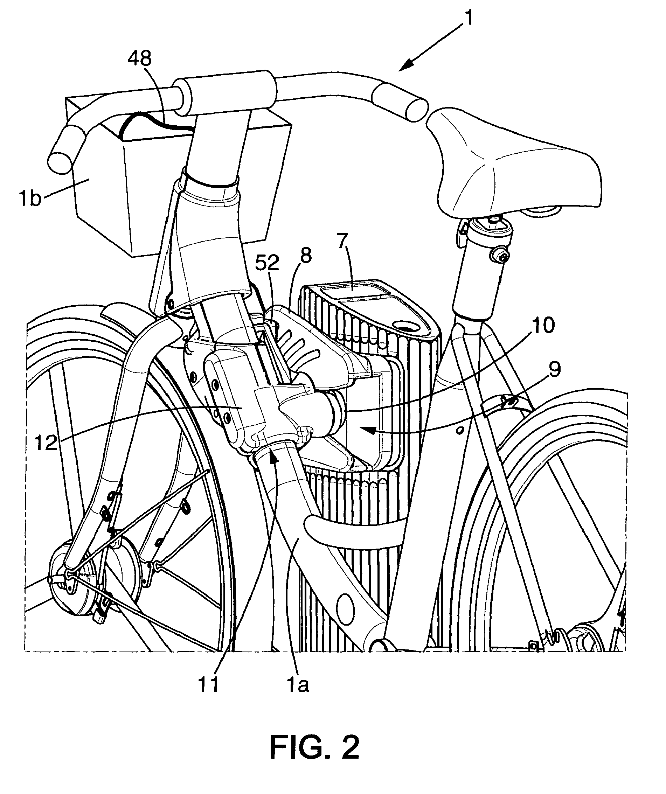

Comme on peut le voir sur la figure 2, chaque poste de verrouillage 7 comporte une gâche 8 formant un boîtier doté d'une ouverture échancrée 9 ouverte horizontalement et adaptée pour recevoir et retenir un organe de verrouillage 10 appartenant à un dispositif de verrouillage 11 solidaire par exemple du cadre 1a d'un des cycles 1.

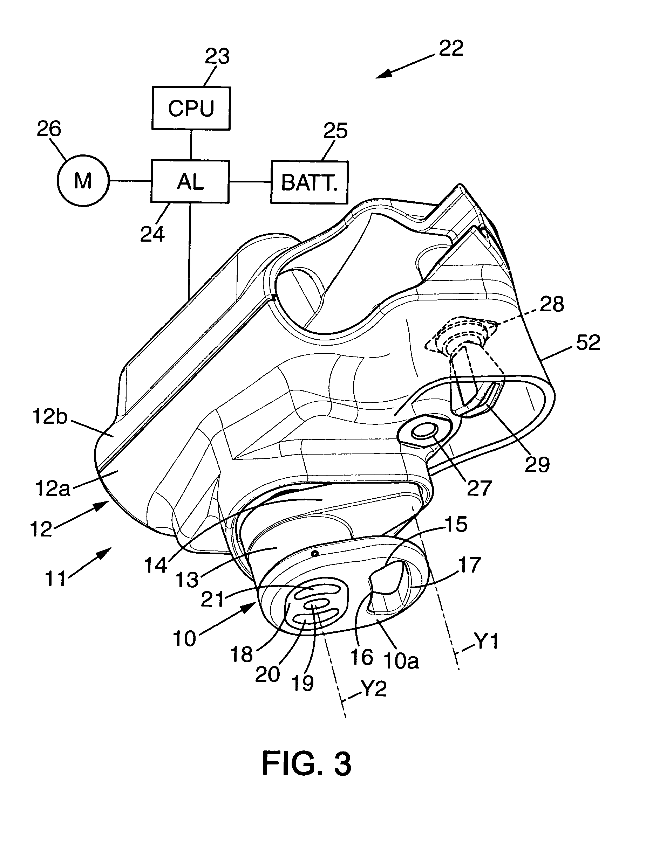

Comme on peut le voir sur la figure 3, le dispositif de verrouillage 11 peut comporter un support 12, qui peut par exemple être réalisé en deux parties 12a, 12b, solidarisées ensemble en venant enserrer l'un des tubes du cadre 1a du cycle. L'organe de verrouillage 10 est monté mobile sur le support 12 de façon à permettre un certain débattement de l'organe de verrouillage 12 au moins verticalement par rapport audit cycle.

Plus particulièrement, l'organe de verrouillage 10 peut être monté pivotant par rapport au support 12, autour d'un axe de rotation horizontal Y1. Dans l'exemple représenté sur les dessins, l'organe de verrouillage 10 comprend une plaque métallique verticale 10a qui est solidarisée à un moyeu 13 cylindrique de révolution présentant un axe central Y2 parallèle à l'axe Y1 et décalé par rapport à Y1, le moyeu 13 étant lui-même solidaire d'un bras de levier 14 qui est monté pivotant sur le support 12 autour de l'axe de rotation Y1.

L'organe de verrouillage 10 s'étend vers l'avant, c'est-à-dire vers l'axe de rotation Y1, à partir du moyeu 13. A son extrémité avant, ledit organe de verrouillage 10 comporte un évidement traversant 15 qui est ouvert parallèlement aux axes Y1, Y2, et qui présente des bords en arc de cercle radialement intérieur 16 et radialement extérieur 17, sensiblement centrés sur l'axe central Y2. De plus, en correspondance avec le moyeu 13, la plaque 10a de l'organe de verrouillage 10 comporte une zone électriquement isolante 18, orientée à l'opposé du boîtier 12, dans laquelle sont réalisées trois zones de contact électriquement conductrices :
- une zone de contact centrale 19, plane et disposée en correspondance avec l'axe central Y2, cette zone de contact centrale 19 étant de préférence allongée sensiblement horizontalement,
- et deux zones de contact de forme générale incurvée 20, 21, allongées sensiblement horizontalement, qui sont disposées de part et d'autre de la zone de contact central, ces zones de contact de forme générale incurvée étant planes et présentant chacune une concavité tournée vers l'axe central Y2.

On notera que l'organe de verrouillage 10 pourrait comporter un nombre de zone de contact 19-21 différent de trois (par exemple deux zones de contact), ces zones de contact comportant de préférence au moins une zone de contact de forme générale incurvée de concavité tournée vers l'axe central Y2.

Les zones de contact 19-21 permettent, lorsque le cycle 1 est verrouillé sur une borne de verrouillage 7, de relier électriquement ladite borne de verrouillage à un circuit électrique 22 appartenant au cycle 1. Ce circuit électrique 22 peut comprendre par exemple au moins une unité centrale électronique 23 (CPU) adaptée pour communiquer avec la borne de verrouillage 7. Dans l'exemple considéré ici, le circuit électrique 22 comporte en outre un circuit de puissance 24 (AL) qui est relié à l'unité centrale électronique 23 ainsi qu'à une batterie 25 (BATT.) et à un moteur électrique d'assistance 26 (M) qui peut être logé par exemple dans le moyeu 1c (voir figure 1) du cycle pour aider à la propulsion du cycle en cours d'utilisation. Dans ce cas, les zones de contact 19-21 servent non seulement à faire communiquer la bande de verrouillage 7 avec l'unité centrale électronique 22, mais également à recharger la batterie 25 qui permet ensuite d'alimenter le moteur électrique 26 en cours d'utilisation.

Par ailleurs, comme il sera expliqué plus en détail ci-après, le support 12 du dispositif de verrouillage comporte en outre un logement de réception 27 pour un antivol et une serrure 28 dotée d'une clef 29 pour verrouiller l'antivol.

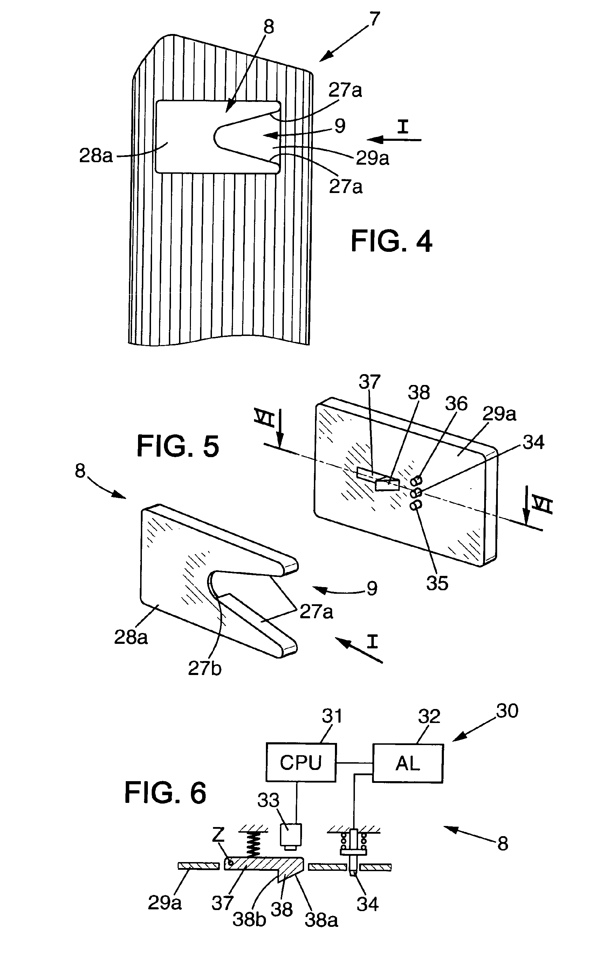

Comme représenté sur les figures 4 et 5, l'ouverture échancrée 9 de la gâche 8 comporte avantageusement deux guides 27a en forme de rampes convergeant l'une vers l'autre dans la direction d'insertion I de l'organe de verrouillage dans la gâche. Ces guides 27a sont à adapter pour coopérer avec la plaque 10a de l'organe de verrouillage pour déplacer l'organe de verrouillage 10 autour de l'axe de rotation Y1 jusqu'à une position nominale de verrouillage relativement à la gâche 8. On assure ainsi que l'organe de verrouillage 10 et plus particulièrement l'évidemment 15 de cet organe de verrouillage, se trouve à bonne hauteur par rapport à la gâche 10 après insertion dans ladite gâche, dans la direction d'insertion I.

Comme on peut le voir sur la figure 5, la gâche 8 comporte un couvercle 28a, incluant par exemple l'ouverture échancrée 9 et les guides 27a, et une embase 29a.

Comme on peut le voir sur les figures 5 et 6, l'embase 29a peut comporter un circuit électrique 30 comprenant par exemple une unité centrale électronique 31 (CPU), un circuit de puissance 32 (AL), un électro-aimant (33) et trois contacts électrique 34, 35, 36 qui peuvent par exemple se présenter sous forme de broches faisant saillie hors de l'embase 29 et adaptées pour venir en contact respectivement avec les zones de contact électrique 19, 20, 21 de l'organe de verrouillage lorsque le cycle est verrouillé sur la borne de verrouillage 7. Les contacts électriques 34, 35, 36 peuvent par exemple être sensiblement alignés verticalement.

Par ailleurs, l'embase 29 comporte également un organe d'accrochage 37 tel que par exemple un crochet monté pivotant autour d'un axe vertical Z et doté d'un bec 38 faisant saillie par rapport à l'embase 29a. Le crochet 37 est sollicité élastiquement vers une positon de repos dans laquelle le bec 38 fait saillie par rapport à l'embase 29, de façon que lorsque l'organe de verrouillage 10 est engagé dans la gâche 8 dans la direction d'insertion I, le bec 38 soit repoussé jusque dans une position escamotée par coopération entre une surface inclinée 38a du bec 38 et le bord avant de la plaque 10a, puis ledit bec 38 s'engage dans l'évidemment 15 de la plaque 10a en retenant alors ladite plaque par coopération entre un bord d'arrêt 38b appartenant au bec et le bord extérieur 17 de l'évidemment 15.

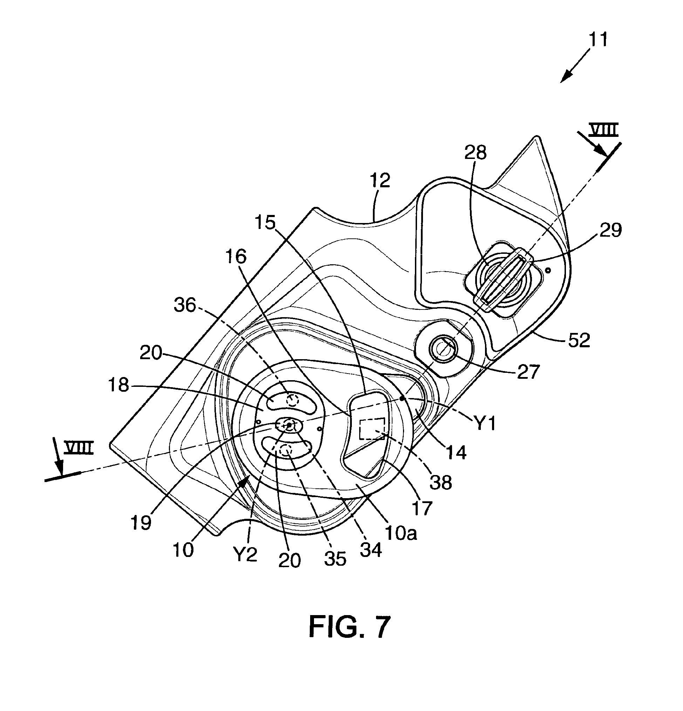

Dans cette position, le moyeu 13 de l'organe de verrouillage est de préférence en contact avec le bord d'extrémité 27b de l'ouverture échancrée 9 du couvercle 28a, de façon que le cycle 1 soit alors verrouillé sur la borne de verrouillage 7 avec un faible jeu. Les positions relatives du bec 38 et des contacts 34-36 relativement à l'organe de verrouillage 10 sont représentées en traits mixtes sur la figure 7, dans la position de verrouillage du cycle 1 sur la borne de verrouillage 7.

L'organe d'accrochage 37 peut en outre être déplacé jusqu'à une position escamotée par l'électro-aimant 33, pour permettre d'enlever le cycle 1 de la borne de verrouillage 7.

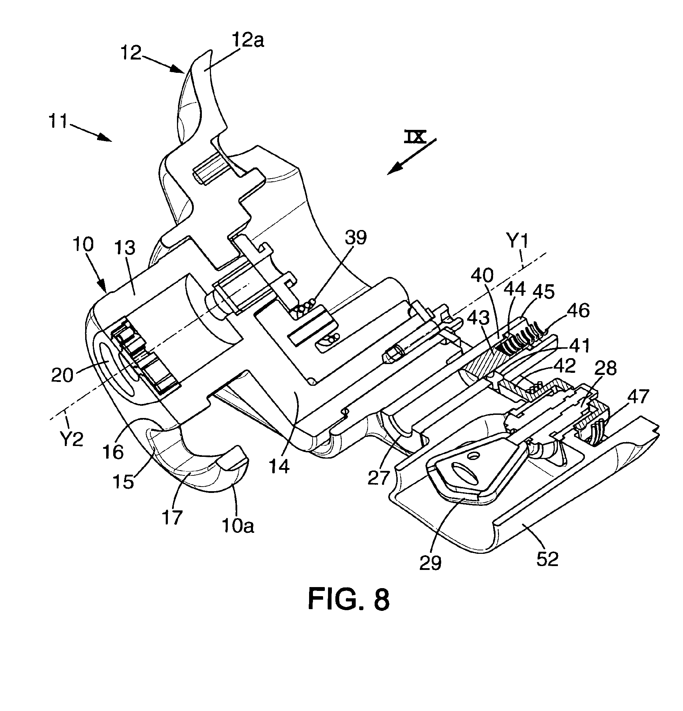

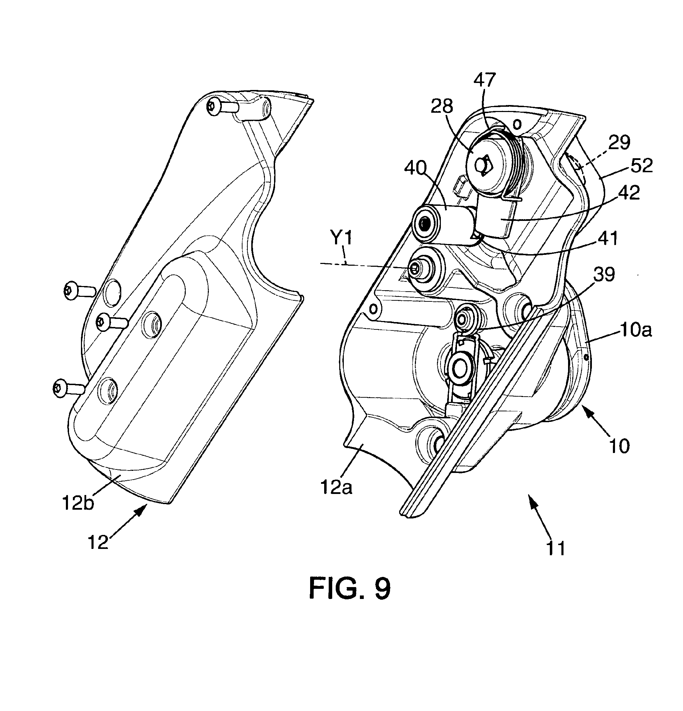

Comme représenté sur les figures 8 et 9, l'organe de verrouillage 10 est sollicité élastiquement vers une position de repos par un ressort 39. Par ailleurs, le logement de réception d'antivol 27 susmentionné est délimité par une douille creuse 40 qui s'étend horizontalement et qui présente une fente latérale verticale 41 dans laquelle peut pénétrer un verrou pouvant se présenter par exemple sous la forme d'une plaquette verticale 42 tournant avec la clef 29 et la partie mobile de la serrure 28, ladite plaquette 42 étant sollicitée élastiquement vers la fente 41 par un ressort 47.

Un organe d'accrochage tel qu'une broche cylindrique 43 est montée coulissante dans le logement 27. Cette broche 43 est dotée d'une tête élargie 44 disposée vers l'intérieur du support 12, laquelle tête 44 coulisse dans une portion élargie 45 du logement 27. Un ressort 46, qui prend appui sur une partie du support 12, repousse la tête 44 en sollicitant ainsi élastiquement la broche 43 vers une position de repos où la tête 44 est en appui contre l'épaulement qui délimite la portion élargie 45 du logement.

Dans cette position de repos, la broche 43 recouvre la fente 41 et empêche la plaquette 42 de pénétrer complètement dans ladite fente 41 et dans le logement de réception 27, de sorte que la clef 29 reste dans une position angulaire où elle ne peut pas sortir de la serrure 28.

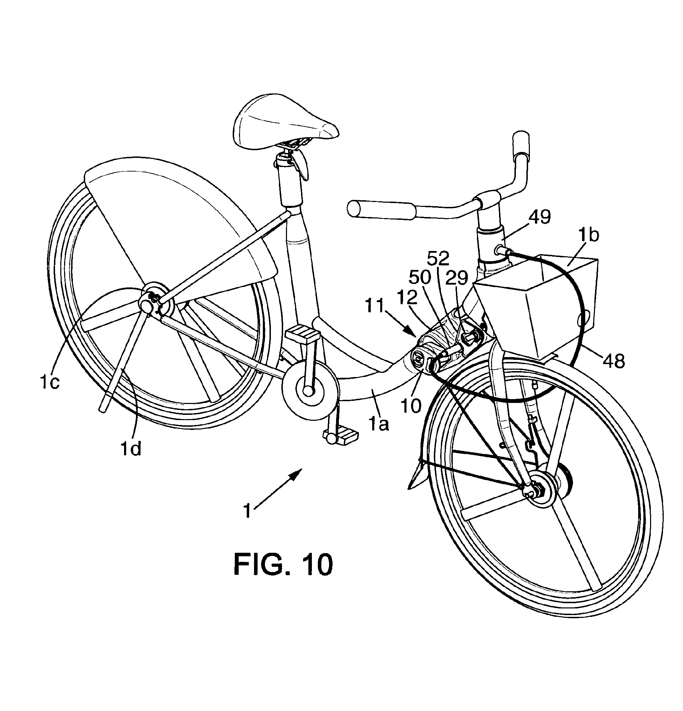

Comme représenté sur la figure 10, chaque cycle 1 comporte en outre un antivol 48 qui peut se présenter par exemple sous la forme d'un câble métallique ou autre dont une extrémité est fixée rigidement au cadre 1a du cycle, par exemple au niveau de l'attache 49 d'un panier 1b situé à l'avant du cycle. A son extrémité opposée, l'antivol 48 se termine par une broche métallique rigide 50 qui est adaptée pour être reçue dans le logement de la réception 27 susmentionné. L'antivol 48 permet à un utilisateur d'immobiliser temporairement le cycle 1, lequel cycle peut alors reposer par exemple sur une béquille 1d montée sur le cadre 1a.

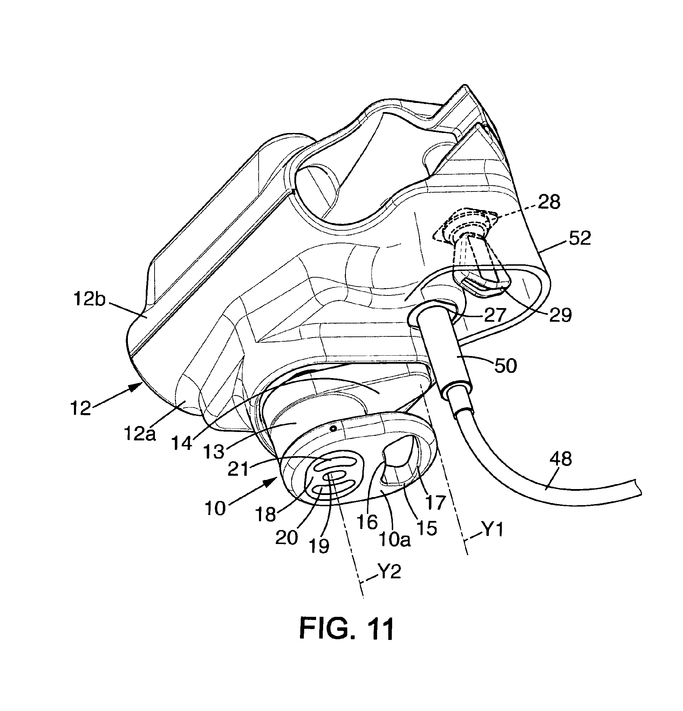

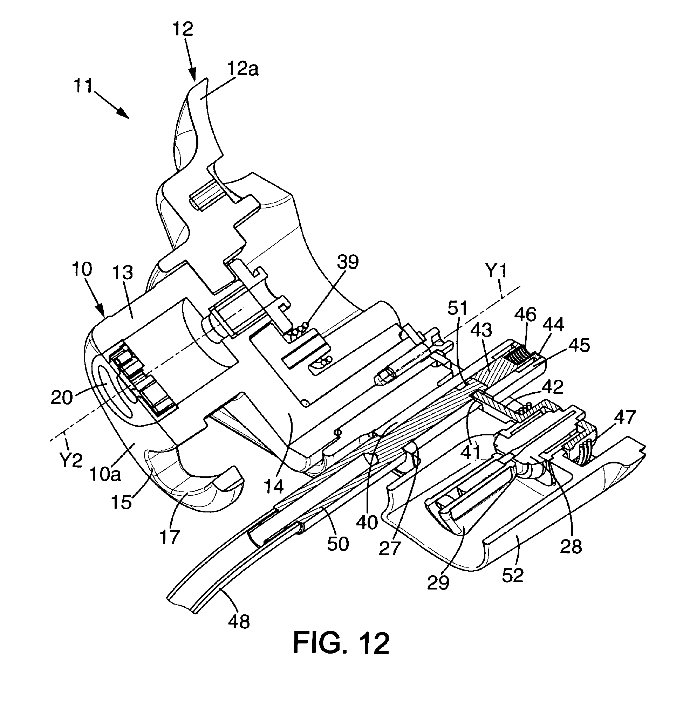

Comme on peut le voir plus en détail sur les figures 11 et 12, lorsque la broche 50 est reçue dans le logement de réception 27, elle empêche le cycle 1 d'être remis en place sur une borne de verrouillage 7, puisque ladite broche empêche alors l'organe de verrouillage 10 de pénétrer dans la gâche 8 de la borne de verrouillage.

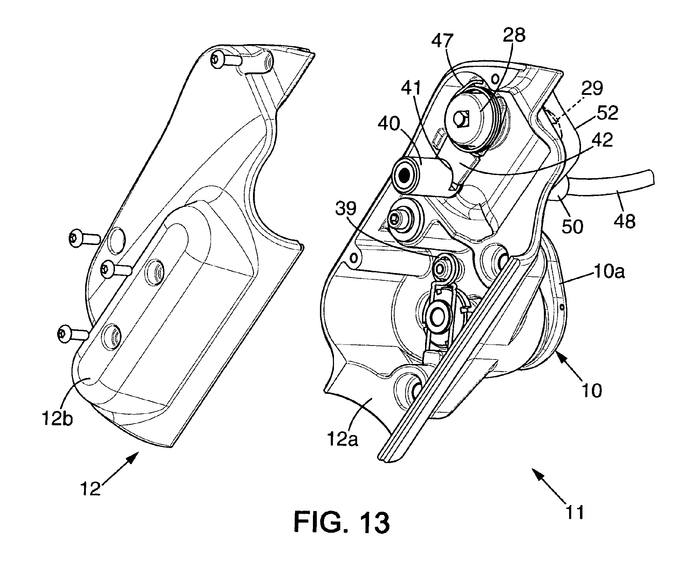

Comme représenté sur les figures 12 et 13, lorsque la broche 50 de l'antivol 48 est insérée dans le logement de réception 27, elle repousse la broche 43 vers l'intérieur du support 12 en comprimant le ressort 46, jusque dans une position de butée où un évidement latéral tel qu'une gorge annulaire 51 ménagée dans la broche 50, vient en correspondance avec la fente 41 de la douille 40 qui délimite le logement de réception 27. Dans cette position, la plaquette 42 peut pénétrer complètement dans la fente 41 et la gorge 51 sous l'action du ressort 47, en tournant jusqu'à une position angulaire à laquelle il est possible d'enlever la clef 29 de la serrure 28.

Le dispositif qui vient d'être décrit fonctionne comme suit.

Lorsqu'un utilisateur veut emprunter un cycle 1 sur l'une des bornes de verrouillage 7, il peut par exemple insérer une carte électronique portative dans le lecteur 5 de la borne interactive 2 puis rentrer un code secret au moyen du clavier 3, de façon à s'identifier auprès de ladite borne interactive. La borne interactive 2 commande alors la gâche 8 d'une des bornes de verrouillage 7, de façon à déverrouiller le cycle 1 en place sur cette borne. L'utilisateur peut alors prendre le cycle 1, et l'unité centrale électronique 31 du cycle repère alors l'enlèvement du cycle 1 puisqu'elle ne peut plus communiquer avec l'unité centrale électronique 23 de ce cycle. L'unité centrale électronique 31 de la borne de verrouillage 7 informe alors la borne interactive 2 de cet enlèvement.

Tant que le cycle 1 est en position de stockage ou en cours d'utilisation normale, son antivol 48 est simplement stocké dans le panier 1b (voir figures 1 et 2), et la clef 29 ne peut pas être enlevée de la serrure 28, comme expliqué précédemment.

De plus, tant que le cycle 1 est verrouillé sur la borne 7, ladite borne 7 et la gâche 8 empêchent d'insérer la broche 50 de l'antivol dans son logement de réception 27. Dans cette position la clef 29 est en outre de préférence masquée par une paroi cache-clef 52 (voir par exemple la figure 3) qui entoure au moins partiellement la clef et qui débouche en regard de la gâche 8 (voir figure 2).

Pendant l'utilisation du cycle, lorsque l'utilisateur souhaite le verrouiller temporairement, il passe l'antivol 48 dans la roue avant du cycle et engage la broche 50 de l'antivol dans le logement de réception 27 du support 12 (position d'immobilisation du cycle), de sorte que la plaquette 42 de la serrure 28 verrouille la broche 50 sur le support 12, et de sorte que la clef 29 de l'antivol tourne jusqu'à une position où elle peut être enlevée du support 12 comme expliqué ci-dessus. L'utilisateur enlève donc la clef 29 de la serrure 28, de sorte que le cycle est temporairement immobilisé. Lorsque l'utilisateur veut reprendre le cycle, il lui suffit d'insérer la clef 29 dans la serrure 28 et de tourner ladite clef de façon à libérer la broche 50 de l'antivol, après quoi l'antivol 48 est à nouveau stocké dans le panier 1b du cycle.

Lorsque l'utilisateur rend le cycle 1 et le met en place sur une borne de verrouillage 7, il engage l'organe de verrouillage 10 dans la gâche 8 de la borne de verrouillage. Au cours de ce mouvement, l'organe de verrouillage 10 pivote autour de l'axe de pivotement Y1, en étant guidé par les guides 217a de la gâche 8, de façon que l'évidement 15 dudit organe de verrouillage se trouve parfaitement en correspondance avec le bec 38 de l'organe d'accrochage et de façon que les zones de contact 19-21 du cycle se trouvent parfaitement en correspondance avec les contacts 34-36 de la gâche. L'unité centrale électronique 31 de la borne de verrouillage peut alors communiquer avec l'unité centrale électronique 23 du cycle par l'intermédiaire d'au moins certains des contacts 19-21 et 34-36 de façon à identifier le cycle et à informer la borne interactive 2 du fait que le cycle a été rendu. De plus, dans l'exemple considéré ici, le circuit électrique 30 de la borne de verrouillage 7 peut alors recharger la batterie 25 du cycle 1 par l'intermédiaire d'au moins certains des contacts 19-21 et 34-36.

Eventuellement, les contacts 19-21 et 34-36 pourraient être remplacés par des interfaces de communication sans contact (fonctionnant par exemple par induction), notamment si le cycle 1 ne comportait pas de moteur 26.

On notera que lorsque le cycle est emprunté et rendu, la borne interactive 2 peut communiquer avec un poste central de gestion des cycles (non représenté), le cas échéant relié à plusieurs aires de stockage de cycles et donc à plusieurs bornes interactives 2.

On notera par ailleurs, que selon une variante de l'invention, la serrure 28 et la clef 29 pourrait être remplacées par un système de verrouillage électronique, par exemple un système à code.

## Revendications

1. Système automatique de stockage de cycles comprenant :
- une pluralité de cycles (1) portant chacun un organe de verrouillage (10),
- une pluralité de postes de verrouillage (7) fixes comportant chacun au moins une gâche (8) adaptée pour recevoir l'organe de verrouillage (10) de l'un des cycles et pour retenir ledit organe de verrouillage lorsqu'il atteint une position de verrouillage,
**caractérisé en ce que** l'organe de verrouillage (10) est monté mobile sur le cycle (1) de façon à permettre un certain débattement de l'organe de verrouillage (10) au moins verticalement par rapport audit cycle (1).

2. Système automatique de stockage de cycles selon la revendication 1, dans lequel la gâche (8) comporte une entrée (9) pourvue d'au moins une rampe de guidage (27a) pour déplacer l'organe de verrouillage (10) jusqu'à une position nominale de verrouillage par rapport au poste de verrouillage (7).

3. Système automatique de stockage de cycles selon la revendication 1 ou la revendication 2, dans lequel l'organe de verrouillage (10) est sollicité élastiquement vers une position de repos par rapport au cycle (1).

4. Système automatique de stockage de cycles selon l'une quelconque des revendications précédentes, dans lequel l'organe de verrouillage (10) est monté pivotant par rapport au cycle (1) autour d'un axe de rotation (Y1) horizontal.

5. Système automatique de stockage de cycles selon la revendication 4, dans lequel l'organe de verrouillage (10) comporte un évidement (15) adapté pour recevoir un organe d'accrochage (37) appartenant à la gâche (8), ledit évidement (15) laissant un jeu vertical entre l'organe d'accrochage (37) et l'organe de verrouillage (10) pour permettre ledit débattement de l'organe de verrouillage (10).

6. Système automatique de stockage de cycles selon la revendication 5, dans lequel l'organe de verrouillage (10) comporte un moyeu circulaire (13) présentant un axe central (Y2) parallèle à l'axe de rotation (Y1) et l'évidement (15) comporte un bord extérieur (17) circulaire sensiblement centré sur ledit axe central (Y2), la gâche (8) comportant un bord de butée (27b) qui coopère par butée avec le moyeu (13) pour limiter l'engagement horizontal de l'organe de verrouillage (10) dans la gâche (8), et l'organe d'accrochage (37) coopérant avec ledit bord extérieur (17) de l'évidement pour empêcher que l'organe de verrouillage (10) ne ressorte de la gâche lorsque le cycle (1) est verrouillé sur le poste de verrouillage (7).

7. Système automatique de stockage de cycles selon la revendication 6, dans lequel l'évidement (15) est ménagé dans une plaque verticale (10a) solidaire du moyeu (13).

8. Système automatique de stockage de cycles selon la revendication 7, dans lequel l'axe de rotation (Y1) est distinct de l'axe central (Y2), le moyeu (13) étant relié audit axe de rotation (Y1) par un bras de levier (14).

9. Système automatique de stockage de cycles selon la revendication 8, dans lequel l'axe de rotation (Y1) est situé vers l'avant par rapport au moyeu (13), dans la direction d'insertion (I) de l'organe de verrouillage (10) dans la gâche (8).

10. Système automatique de stockage de cycles selon l'une quelconque des revendications précédentes, dans lequel le cycle (1) comporte au moins une unité centrale électronique (23), la gâche (8) et l'organe de verrouillage (10) comportant des interfaces (34-36, 19-21) permettant de faire communiquer ladite unité centrale (23) du cycle avec le poste de verrouillage (7) lorsque ledit cycle est verrouillé sur le poste de verrouillage.

11. Système automatique de stockage de cycles selon l'une quelconque des revendications précédentes, dans lequel le cycle (1) comporte au moins un circuit électrique (22), la gâche (8) et l'organe de verrouillage (10) comportant des contacts électriques (19-21, 34-36) disposés en regard les uns des autres pour relier le circuit électrique (22) du cycle au poste de verrouillage (7) lorsque ledit cycle est verrouillé sur ledit poste de verrouillage.

12. Système automatique de stockage de cycles selon la revendication 11 et selon l'une quelconque des revendications 6 à 10, dans lequel lesdits contacts électriques comprennent au moins :
- une zone de contact (20, 21) de forme générale incurvée, de concavité tournée vers ledit axe central (Y2), et appartenant à un premier élément choisi parmi l'organe de verrouillage (10) et la gâche (8),
- et un contact électrique complémentaire (35, 36) qui est en appui élastique sur ladite zone de contact (20, 21) de forme générale incurvée lorsque le cycle (1) est verrouillé sur le poste de verrouillage (7), ledit contact électrique complémentaire (35, 36) appartenant à un deuxième élément choisi parmi l'organe de verrouillage (10) et la gâche (8).

13. Système automatique de stockage de cycles selon la revendication 12, dans lequel ladite zone de contact (20, 21) de forme générale incurvée est solidaire de l'organe de verrouillage (10) et ledit contact électrique complémentaire (35, 36) appartient à la gâche (8).

14. Système automatique de stockage de cycles selon la revendication 13, dans lequel l'organe de verrouillage (10) comporte deux zones de contact (20, 21) de forme générale incurvée, de concavité tournée vers ledit axe central (Y2), et la gâche (8) comporte deux contacts électriques complémentaires (35, 36) qui sont en appui élastique sur lesdites zones de contact (20, 21) de forme générale incurvée lorsque le cycle (1) est verrouillé sur le poste de verrouillage (7).

15. Système automatique de stockage de cycles selon la revendication 14, dans lequel l'organe de verrouillage (10) comporte en outre une zone de contact centrale (19) disposée en correspondance avec l'axe central (Y2) et la gâche (8) comporte un contact électrique central (34) qui est en appui élastique sur ladite zone de contact centrale (19) lorsque le cycle (1) est verrouillé sur le poste de verrouillage (7).

16. Cycle pour un système selon l'une quelconque des revendications précédentes, comprenant un organe de verrouillage (10) destiné à être reçu dans une gâche (8) appartenant à un poste de verrouillage (7), ledit organe de verrouillage (10) étant monté mobile sur le cycle (1) de façon à permettre un certain débattement de l'organe de verrouillage (10) au moins verticalement par rapport audit cycle.

17. Dispositif de verrouillage pour un cycle selon l'une quelconque des revendications 1 à 15, comprenant un support (12) destiné à être fixé rigidement au cycle (1) et un organe de verrouillage (10) destiné à être reçu dans une gâche (8) appartenant à un poste de verrouillage (7), ledit organe de verrouillage (10) étant monté mobile sur le support (12) de façon à permettre un certain débattement de l'organe de verrouillage (10) au moins verticalement par rapport audit support (12) lorsque le support est monté sur le cycle.
